# EUROPEAN PATENT SPECIFICATION

(11) **EP 1 216 822 B1**
(45) Date of publication and mention of the grant of the patent: **26.01.2005**
(21) Application number: 00830832.2
(22) Date of filing: 19.12.2000
(51) Int. Cl.: B32B 27/08

(54) **Multilayer reinforcing material and coextrusion process for preparing the same**
Mehrschichtverstärkungsmaterial und Koextrusionsverfahren zur Herstellung
Matériau de renforcement en plusieurs couches et méthode de coextrusion pour sa fabrication

(43) Date of publication of application: 26.06.2002
(73) Proprietor: Tecno GI S.p.A., 28071 Borgolavezzaro, Novara (IT)
(72) Inventor: Balbo, Roberta, Borgolavezzaro 28071 (IT); Coarezza, Luigi, Borgolavezzaro 28071 (IT); Caresana, Carlo, Borgolavezzaro 28071 (IT); Zanetti, Giovanni, Borgolavezzaro 28071 (IT)
(74) Representative: Long, Giorgio

(56) References cited:
- EP-A- 0 134 523
- US-A- 4 279 801
- US-A- 4 346 934
- US-A- 6 100 328

## Description

The present invention relates to a multilayer reinforcing material and to a co-extrusion process for preparing the same.

It is known practice to use reinforcing materials in the shoe industry.

In this sector, these materials are used to reinforce inner portions of a shoe such as, for example, portions in the vicinity of the heel and/or the toe.

The abovementioned materials are generally formed from a polymeric binder which may optionally be coupled to a backing material, such as woven or nonwoven fibres or knitted fibres.

However, these reinforcing materials ideally need to have the following physicochemical properties:
a) thermoplastic at a temperature between 80°C and 120°C about, i.e. they need to have a reversible capacity to become plastic by the effect of a heating operation and to harden when cooled,
b) rigid, that is to say that they need to be capable of keeping their shape once deformed by heating and then cooled,
c) elastic, that is to say that they need to have good flexibility, and
d) they need to be adhesive when heated to a temperature of between 80°C and 180°C.

Polymer materials having the abovementioned properties are moreover known. These are, for example, polyesters, polyurethanes or polyolefins.

Typical examples of the said polyesters are polycaprolactones.

Typical examples of the said polyolefins are polyvinyl acetate and ethylene/vinyl acetate or ethylene/acrylic monomer copolymers.

The polymer materials whose physicochemical properties are most suited to the abovementioned use are the polycaprolactones.

However, these polymers have the drawback of being very expensive.

Thus, to overcome the abovementioned drawback, recent reinforcing materials include the presence of fillers to allow the introduction of a smaller amount of polymeric binder.

Typical examples of these fillers are fillers of organic type such as plastics, in particular waste plastics, and fillers of inorganic type optionally coated with a layer of plastic material.

Examples of organic fillers are polyvinyl chloride (PVC), ethylene copolymers and styrene copolymers.

Examples of inorganic fillers are calcium carbonate, kaolin, quartz powders, sugar powder and silicates.

A reinforcing material whose filler particles, during the melting process, do not require to be dissolved in the polymer material but instead can remain in the form of essentially discrete bodies is known. The advantage of this is that it is only in this way that the adhesion properties of the polymer material would be maintained.

The inventors of the present invention have, however, observed that the presence of a filler in non-dissolved form leads to a reinforcing material which visibly has a non-homogeneous and thus relatively unpleasant appearance. This property thus makes it unsuitable for any use in which a reinforcing material may be used at sight, such as, for example, in leather goods or in luggage.

The problem addressed by the present invention is consequently that of providing a reinforcing material which, while maintaining the physicochemical properties illustrated above, also has a pleasant homogeneous appearance, and is also inexpensive.

This problem is solved by a multilayer reinforcing material comprising at least a first layer consisting essentially of at least a polymeric binder and at least a filler and at least a second layer consisting essentially of at least a polymeric binder in which the filler is an amorphous polyethylene terephthalate copolyester and the binder is poly(epsilon-caprolactone)/ polyurethane copolymer, as outlined in the attached claims.

Another subject of the present invention is a co-extrusion process for preparing this reinforcing material.

The expression "consisting essentially of" means that these at least first and second layers of the reinforcing material may comprise further additives chosen from those usually used in this field, as will be defined more fully hereinbelow.

The process for preparing the multilayer reinforcing material according to the invention comprises the steps of:
a) loading a first extruder with a blend comprising at least the polymeric binder in an amount of from 30% to 80% by weight and at least the filler in an amount of from 70% to 20% by weight,
b) loading a second extruder with at least the polymeric binder,
c) heating the said first extruder to such a temperature as to melt the blend in step a),
d) heating the said second extruder to such a temperature as to melt the blend in step b), and
e) co-extruding the masses obtained in steps c) and d), the said step e) being carried out at a temperature such that the said first layer comprises the said filler in a form substantially dissolved in the said polymeric binder.

The said polymeric binder is a poly(epsilon-caprolactone)/polyurethane copolymer formed from linear poly(epsilon-caprolactone) chains linked by urethane groups.

The said polyurethane polyester preferably has a weight-average molecular weight of between 40 000 and 60 000, preferably about 50 000.

The said polymeric binder of the said first layer is the same as the said polymeric binder of the said second layer.

The filler is amorphous polyethylene terephthalate copolyester.

In addition, the filler may be in new or recovered form. In the latter case, it may be dried before use as is known by those skilled in the art.

Advantageously, the blend in step a) comprises from 40% to 60% by weight of polymeric binder and from 60% to 40% by weight of filler.

The blend in step a), and likewise the polymeric binder in step b), may further comprise conventional additives such as, for example, pigments, stabilizers, plasticizers, antistatic agents and coadjuvants.

Preferably, step c) is carried out a temperature of between 180°C and 300°C, depending on the filler used.

Preferably, step d) is carried out at a temperature of between 150°C and 200°C.

Preferably, step e) is carried out a temperature of between 150°C and 300°C.

If so desired, the co-extrusion step e) may be followed by a step f) in which the said multilayer material is coupled to at least a backing material, preferably chosen from woven or nonwoven fibres and knitted fibres.

In one particular embodiment, the reinforcing material of the invention is sandwiched between two layers of the said backing material.

In general, step e) and, if present, step f) are followed by a step g) of calendering. The said calendering step g), carried out in a conventional manner, makes it possible to obtain the desired final thickness of the reinforcing material, to enclose the backing material in the polymer matrix and to give the final reinforcing material a smooth and uniform appearance. In addition, the said calendering step g) makes it possible to cool the reinforcing material and thus harden the thermoplastic polymer.

The thickness of the said reinforcing material is typically between 0.4 mm and 2.5 mm.

The preferred thickness of the said first layer is between 0.35 mm and 2.2 mm, while that of the said second layer is between 0.05 mm and 0.15 mm.

Further characteristics and advantages of the present invention will emerge from the following description, given for indicative purposes and with no limitation, of a number of its preferred embodiments, with reference to the attached figures, in which:
Figure 1 represents a diagrammatic view in cross section of the conventional apparatus for producing the reinforcing material according to the present invention,
Figure 2 represents a perspective view in cross section of the three-layer reinforcing material of the present invention,
Figure 3 represents a perspective view in cross section of the two-layer reinforcing material of the present invention,
Figure 4 represents a perspective view in cross section of the three-layer reinforcing material in which the two outer layers are coupled to a backing material, and
Figure 5 represents a diagrammatic view in cross section of the flow diverter used in the apparatus of Figure 1.

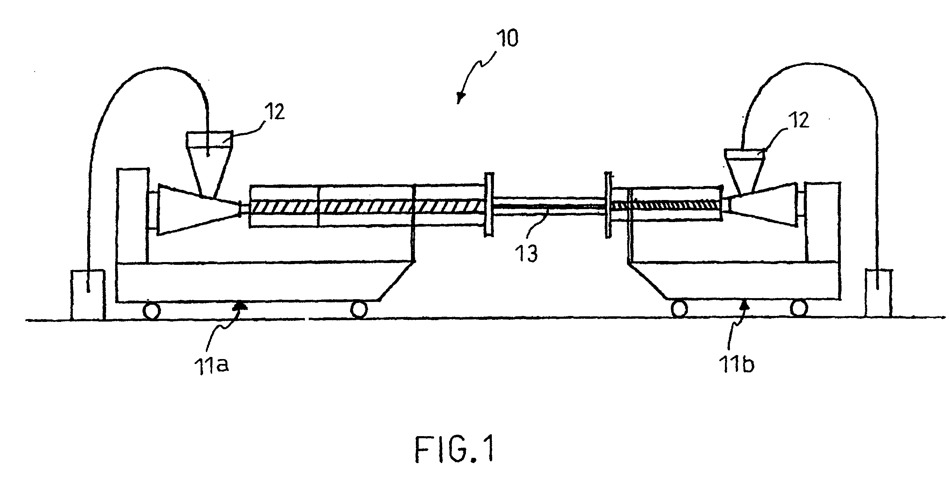

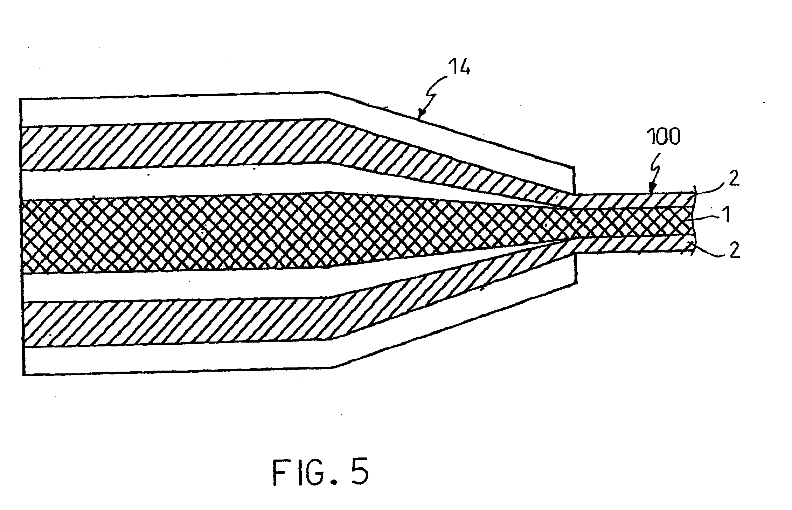

Figure 1 shows a co-extrusion apparatus (10) of conventional type, comprising: (a) a first extruder (11a) and a second extruder (11b) each with a loading hopper (12), (b) a co-extrusion die (13), (c) a calender, not shown, for coupling, smoothing and cooling. The co-extrusion die (13) has a flow diverter (14) shown in Figure 5.

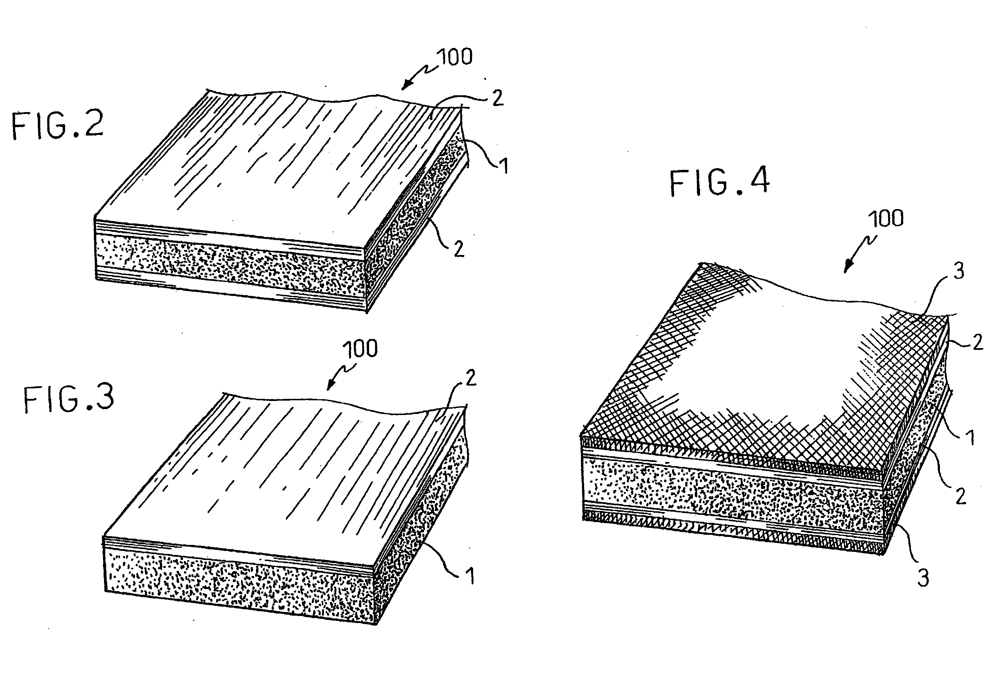

Figure 2 shows the reinforcing material (100) according to the present invention, comprising the said first layer (1) sandwiched between the said second layers (2).

Figure 3 shows the reinforcing material (100) according to the present invention, comprising the said first layer (1) and the said second layer (2).

Figure 4 shows the reinforcing material of Figure 2 coupled to a backing material (3).

Figure 5 shows a flow diverter (14) used in the apparatus of Figure 1, which allows the reinforcing material (100) of Figure 2 to be deposited. The said flow diverter (14) allows the reinforcing material (100) of the present invention to be deposited in up to three layers. Specifically, when it is desired to deposit only two layers, one of the three outlets of the said flow diverter (14) is blocked.

In one embodiment according to the present invention, the reinforcing material (100) of Figure 4 is prepared using the apparatus of Figure 1, in which the components which will form the said first layer (1) of the reinforcing material (100) are loaded, via the hopper (12) into the first extruder (11a).

Simultaneously, the components which will form the said second layer (2) of the reinforcing material (100) are loaded, via the hopper (12), into the second extruder (11b).

The said first and second extruders (11a, 11b) are then heated so as to melt the components present therein. The molten masses thus obtained are conveyed to the co-extrusion die (13), from which the multilayer material (100) exits continuously. On leaving the co-extrusion die (13), the material, which is still hot, is coupled to the backing material (3) and is passed through the calender for the coupling, smoothing and cooling step.

The reinforcing material of the present invention thus has many advantages over the reinforcing material of the prior art.

A first advantage consists of the fact that the reinforcing material of the present invention is a multilayer material. This makes it possible to obtain layers with different physicochemical properties in the light of the desired properties of the final material.

A second advantage consists of the fact that the reinforcing material of the present invention has a smooth and uniform appearance and can thus also be used as a decorative material.

A third advantage consists of the fact that the reinforcing material of the present invention has:
a) good thermoplasticity, which allows it to be processed easily,
b) good rigidity, which allows it to keep its shape,
c) good elasticity, so as to make it flexible, and
d) good adhesion.

A fourth advantage consists of the fact that the co-extrusion process makes it possible to obtain the reinforcing material of the present invention at a competitive price.

The example which follows is given to illustrate the present invention without, however, limiting it in any way.

### Example 1

### Preparation of the reinforcing material

### Composition of the first layer:

50% by weight of poly(epsilon-caprolactone)/polyurethane copolymer granules with a weight-average molecular weight of about 50 000 and a melting point of 65±2°C, and 50% by weight of amorphous polyethylene terephthalate copolyester granules.

### Composition of the second layer:

100% by weight of poly(epsilon-caprolactone)/polyurethane copolymer with a weight average molecular weight of about 50 000 and a melting point of 65±2°C. A co-extrusion machine of conventional type was used. The abovementioned compositions were loaded, via a hopper, into two different extruders: a first extruder for the composition of the first layer and a second extruder for the composition of two second layers. The extruder for the first layer was heated to a maximum temperature of about 200°C, while the extruder for the two second layers was heated to a maximum temperature of about 180°C.
The molten masses thus obtained were co-extruded through a co-extrusion die at a temperature of about 170°C. On leaving the co-extrusion die, the three-layer material, while still hot, was coupled to two perforated plies and subjected to calendering using a three-roll calender with the rolls arranged vertically. The reinforcing material was then further cooled to ambient temperature by passing it through and in contact with a set of cooling rollers.
A three-layer reinforcing material having the following characteristics was thus obtained.
Thickness: 1.10 mm;
Weight: 950 g/m²;
Appearance: homogeneous.
With reference to Figure 4, the reinforcing material (100) obtained thus comprises a first layer (1) formed from a poly(epsilon-caprolactone)/polyurethane copolymer and an amorphous polyethylene terephthalate copolyester and two second layers (2) formed from a poly(epsilon-caprolactone)/polyurethane copolymer, the said two second layers (2) being arranged so as to sandwich the said first layer (1).
The said two second layers (2) were also coupled to two perforated plies (3) arranged so as to sandwich the said two second layers (2).

## Claims

1. A multilayer reinforcing material comprising at least a first layer consisting essentially of at least a polymeric binder and at least a filler and at least a second layer consisting essentially of at least a polymeric binder, in which the said filler is an amorphous polyethylene terephtalate copolyester in a form which is substantially dissolved in the said polymeric binder which is a poly(epsilon-caprolactone)/polyurethane copolymer.

2. A process for preparing the multilayer reinforcing material according to claim 1 comprising at least a first layer consisting essentially of the polymeric binder poly(epsilon-caprolactone)/polyurethane copolymer and a filler which is an amorphous polyethylene terephtalate copolyester and at least a second layer consisting essentially of the polymeric binder poly(epsilon-caprolactone)/polyurethane copolymer, the said process comprising the steps of:
a) loading a first extruder with a blend comprising said polymeric binder in an amount of from 30% to 80% by weight and said filler in an amount of from 70% to 20% by weight,
b) loading a second extruder with said polymeric binder,
c) heating the said first extruder to such a temperature as to melt the blend in step a),
d) heating the said second extruder to such a temperature as to melt the blend in step b), and
e) co-extruding the masses obtained in steps c) and d),
the said step e) being carried out at a temperature such that the said first layer comprises the said filler in a form substantially dissolved in the said polymeric binder. 3 2

3. A process according to Claim 2, in which step e) is followed by a step f) in which the said multilayer material is coupled to at least a backing material.

4. A process according to Claim 2, in which the blend in step a) comprises from 40% to 60% by weight of polymeric binder and from 60% to 40% by weight of filler.

5. A process according to Claim 2, in which step c) is carried out at a temperature of between 180°C and 300°C.

6. A process according to Claim 2, in which step d) is carried out at a temperature of between 150°C and 200°C.

7. A process according to Claim 2, in which step e) is carried out at a temperature of between 150°C and 300°C.

8. An article comprising a reinforcing material as described in Claims 1.

9. An article according to Claim 8, in which the said article is a shoe or an item of luggage.

## Patentansprüche

1. Mehrschichtverstärkungsmaterial, umfassend zumindest eine erste Schicht, die im Wesentlichen aus zumindest einem Polymer-Bindemittel und zumindest einem Füllmittel besteht, und zumindest eine zweite Schicht, die im Wesentlichen aus zumindest einem Polymer-Bindemittel besteht, wobei das Füllmittel ein amorphes Polyethylenterephtalat-Copolyester ist, in einer Form, die im Wesentlichen im Polymer-Bindemittel, welches ein Poly(E-Carpolacton)/Polyurethan-Copolymer ist, gelöst ist.

2. Verfahren zur Herstellung eines Mehrschichtverstärkungsmaterials gemäß Anspruch 1, umfassend zumindest eine erste Schicht, die im Wesentlichen aus dem Polymer-Bindemittel Poly(E-Caprolacton)/Polyurethan-Copolymer und einem Füllmittel, das ein amorphes Polyethylenterephtalat-Copolyester ist, besteht, und zumindest eine zweite Schicht, die im Wesentlichen aus dem Polymer-Bindemittel Poly(E-Caprolacton)/Polyurethan-Copolymer besteht, wobei das Verfahren die Schritte umfasst:
a) Beschicken eines ersten Extuders mit einer Mischung umfassend das Polymer-Bindemittel in einer Menge von 30 bis 80 Gew.% und das Füllmaterial in einer Menge von 70 bis 20 Gew.%,
b) Beschicken eines zweiten Extruders mit dem Polymer-Bindemittel,
c) Erwärmen des ersten Extruders auf eine solche Temperatur, dass die Mischung in Schritt a) schmilzt,
d) Erwärmen des zweiten Extruders auf eine solche Temperatur, dass die Mischung in Schritt b) schmilzt, und
e) Koextrudieren der in Schritt c) und d) erhaltenen Massen,
wobei der Schritt e) bei einer Temperatur durchgeführt wird, so dass die erste Schicht das Füllmaterial in einer Form umfasst, die im Wesentlichen in dem Polymer-Bindemittel gelöst ist.

3. Verfahren nach Anspruch 2, in dem Schritt e) ein Schritt f) folgt, in welchem das Mehrschichtmaterial mit zumindest einem Verstärkungsmaterial verbunden ist.

4. Verfahren nach Anspruch 2, in welchem die Mischung in Schritt a) 40 bis 60 Gew.% des Polymer-Bindemittels und 60 bis 40 Gew.% des Füllmaterials umfasst.

5. Verfahren nach Anspruch 2, in welchem Schritt c) bei einer Temperatur zwischen 180 °C und 300 °C durchgeführt wird.

6. Verfahren nach Anspruch 2, in welchem Schritt d) bei einer Temperatur zwischen 150 °C und 200 °C durchgeführt wird.

7. Verfahren nach Anspruch 2, in welchem Schritt e) bei einer Temperatur zwischen 150 °C und 300 °C durchgeführt wird

8. Produkt, welches ein Verstärkungsmaterial wie in Anspruch 1 beschrieben umfasst.

9. Produkt nach Anspruch 8, wobei das Produkt ein Schuh oder ein Gepäckstück ist.

## Revendications

1. Matériau de renforcement multicouches comprenant au moins une première couche, essentiellement constituée par au moins un liant polymère et au moins une matière de charge, et au moins une deuxième couche, essentiellement constituée par au moins un liant polymère, dans lequel ladite matière de charge est un copolyester de polytéréphtalate d'éthylène amorphe sous une forme qui est sensiblement dissoute dans ledit liant polymère, qui est un copolymère de poly(epsilon-caprolactone)/polyuréthane.

2. Procédé de préparation du matériau de renforcement multicouches selon la revendication 1, comprenant au moins une première couche, essentiellement constituée par le liant polymère à base de copolymère de poly(epsilon-caprolactone)/ polyuréthane, et une matière de charge qui est un copolyester de polytéréphtalate d'éthylène amorphe, et au moins une deuxième couche essentiellement constituée par le liant polymère à base de copolymère de poly(epsilon-caprolactone)/polyuréthane, ledit procédé comprenant les étapes consistant à :
a) charger une première extrudeuse avec un mélange comprenant ledit liant polymère en une quantité d'environ 30% à 80% en poids et ladite matière de charge en une quantité d'environ 70% à 20% en poids,
b) charger une deuxième extrudeuse avec ledit liant polymère,
c) chauffer ladite première extrudeuse à une température permettant de faire fondre le mélange de l'étape a),
d) chauffer ladite deuxième extrudeuse à une température permettant de faire fondre le mélange de l'étape b), et
e) co-extruder les pâtes obtenues dans les étapes c) et d),
ladite étape e) s'effectuant à une température telle que ladite première couche comprend ladite matière de charge sous une forme sensiblement dissoute dans ledit liant polymère.

3. Procédé selon la revendication 2, dans lequel étape e) est suivie d'une étape f) dans laquelle ledit matériau multicouches est couplé à au moins un support.

4. Procédé selon la revendication 2, dans lequel le mélange de l'étape a) comprend de 40% à 60% en poids de liant polymère et de 60% à 40% en poids de matière de charge.

5. Procédé selon la revendication 2, dans lequel l'étape c) s'effectue à une température dans la plage de 180°C à 300°C.

6. Procédé selon la revendication 2, dans lequel l'étape d) s'effectue à une température dans la plage de 150°C à 200°C.

7. Procédé selon la revendication 2, dans lequel l'étape e) s'effectue à une température dans la plage de 150°C à 300°C.

8. Article comprenant un matériau de renforcement selon la revendication 1.

9. Article selon la revendication 8, dans lequel ledit article est une chaussure ou un bagage.
